# EUROPEAN PATENT SPECIFICATION

(11) **EP 2 952 395 B1**
(45) Date of publication and mention of the grant of the patent: **02.08.2017**
(21) Application number: 13873342.3
(22) Date of filing: 24.12.2013
(51) Int. Cl.: A44B 11/25, B60R 22/18

(54) **TONGUE AND SEAT BELT DEVICE USING SAME**
ZUNGE UND SITZGURTVORRICHTUNG DAMIT
LANGUETTE ET DISPOSITIF DE CEINTURE DE SÉCURITÉ L'UTILISANT

(30) Priority: 31.01.2013 JP 2013017073
(43) Date of publication of application: 09.12.2015
(73) Proprietor: Takata Corporation, Tokyo 106-8488 (JP)
(72) Inventor: ICHIDA, Yoshiyuki, Tokyo 106-8488 (JP)
(74) Representative: Banzer, Hans-Jörg
(86) International application number: PCT/JP2013/084425
(87) International publication number: WO 2014/119183

(56) References cited:
- JP-A- 2005 011 978
- JP-A- 2009 006 745
- JP-A- 2009 113 532
- JP-A- 2012 054 323
- US-A1- 2003 234 530

## Description

### Technical Field

The present invention relates to the technical field of a tongue that is slidably supported by a seat belt and that is secured to a buckle fixed to, for example, a vehicle body and to the technical field of a seat belt device using the tongue.

### Background Art

Hitherto, in a seat belt device that is attached to a seat of a vehicle, such as an automobile, an occupant is restrained by a seat belt in an emergency where a deceleration that is higher than that in a normal state acts upon a vehicle during, for example, a collision (hereunder simply referred to as "in an emergency"). As such a type of seat belt device, a three-point seat belt device is generally widely known and is frequently used. In a general three-point seat belt device that is well known, a seat belt that has been withdrawn from a seat belt retractor is guided by a belt guide anchor and its front end is fixed to a vehicle body. A tongue is slidably supported by the seat belt that has been guided by the belt guide anchor. In this case, the seat belt slidably passes through an elongated seat-belt through hole of the tongue. By securing the tongue to a buckle fixed to the vehicle body, the seat belt is fastened around the occupant.

When a seat belt is not fastened, since, ordinarily, the seat belt is maximally retracted by the seat-belt retractor, the seat belt is positioned along an inside wall of a vehicle at, for example, a center pillar. Therefore, the tongue positioned by a tongue stopper is positioned near this inside wall. Consequently, if, when an occupant gets off the vehicle, the occupant contacts the tongue, the tongue may contact a trim at the inside wall of the vehicle. When, in order to get off the vehicle, the occupant wearing the seat belt detaches the tongue from the buckle and lets go of the tongue, the seat belt is retracted by the seat belt retractor. During the retraction of the seat belt, the tongue may similarly contact the trim at the inside wall of the vehicle as a result of being raised as the seat belt is being retracted. Further, the tongue of the seat belt device in a state in which an occupant is not seated on a seat of the vehicle and in which the seat belt is in an unfastened state may similarly contact the trim at the inside wall of the vehicle due to vibration generated when the vehicle travels. In this case, since the tongue is guided so that a securing portion faces the inside of a vehicle chamber by the tongue stopper, a portion that contacts the trim at the inside wall of the vehicle is mostly a grasping portion. When the tongue contacts the trim at the inside wall of the vehicle in this way, not only may abnormal noise be generated, but also small scratches or dents may occur in the trim. This may cause the inside of the vehicle chamber to be unpleasant.

Accordingly, in order to prevent the occurrence of such abnormal noise and such small scratches or dents, the following tongue is proposed. The tongue is such that, at a grasping portion of the tongue that is very likely to contact a trim at an inside wall of a vehicle, molding with a relatively hard resin is performed at a portion of a metallic plate that becomes a core and through which a seat belt passes and molding with a resin that is softer than the hard resin is performed at a portion of the metallic plate that is very likely to contact the inside wall of the vehicle (refer to, for example, Patent Literature (PTL) 1).

According to the tongue described in PTL 1, by performing molding with a hard resin at a portion of an end surface of a soft-resin molded portion so as to cover the portion of the end surface of the soft-resin molded portion, it is possible to firmly maintain close contact between the core of the metallic plate and a tip edge of the end surface of the soft-resin molded portion, and to prevent the tip edge of the end surface of the soft-resin molded portion from coming off from the core.

### Citation List

### Patent Literature

PTL 1: Japanese Unexamined Patent Application Publication No. 2007-229350

### Summary of Invention

### Technical Problem

Hitherto, polyamide resin, such as nylon 6, is used for performing molding at the metallic plate with a hard resin, and thermoplastic elastomer (TPE) is often used for performing molding at the metallic plate with a soft resin.

However, it is difficult to bond (or fuse) the polyamide resin, such as nylon 6, and the thermoplastic elastomer (TPE) to each other due to problems related to differences between the molding temperatures and physical properties of these materials. Therefore, these two resins tend to come off from each other. Consequently, there is room for further considering durability. Accordingly, as in the tongue described in the aforementioned PTL 1, by covering the end surface of the polyamide-resin molded portion using thermoplastic elastomer (TPE), it is possible to prevent the tip edge of the end surface of the soft-resin molded portion from coming off from the core. However, it is difficult to bond (fuse) the thermoplastic elastomer (TPE) and the polyamide-resin molded portion to each other. Therefore, firmer bonding (fusion) between the thermoplastic elastomer (TPE) and the polyamide-resin molded portion is required. A tongue according to the preamble of claim 1 is known from US 2003/0234530 A1.

The present invention has been achieved in view of such circumstances, and its object is to provide a tongue that is capable of further increasing durability by reducing coming off of two different resins of a resin molded portion at a metallic plate, while reducing the occurrence of small scratches or dents in a surrounding member and reducing abnormal noise when the tongue contacts this member. Solution to Problem

According to the present invention, a tongue as defined in claim 1 and a corresponding seat belt device as defined in claim 4 are provided. The dependent claims define preferred or advantageous embodiments of the invention.

To solve the aforementioned problem, there is provided a tongue according to the present invention including a securing portion that is formed of a metallic plate and that is securable to a buckle and a resin molded portion that forms a grasping portion as a result of performing molding at a grasping portion corresponding section with a resin and that has a belt through hole through which a seat belt passes, the grasping portion corresponding section being formed of the metallic plate and being integrally formed with the securing portion, the grasping portion being grasped and a securing operation being performed to secure the securing portion to the buckle, wherein the resin molded portion includes a hard-resin molded portion that is formed by performing molding at a predetermined portion of the grasping portion corresponding section of the metallic plate with a hard resin and a soft-resin molded portion that is formed by being molded on a predetermined portion of the hard-resin molded portion with a resin that is softer than the hard resin and by being bonded or fused to the hard-resin molded portion, wherein an elongated protrusion is provided at a portion where the hard-resin molded portion is bonded or fused to the soft-resin molded portion, and wherein the soft-resin molded portion is molded with the soft resin so as to cover the elongated protrusion.

In addition, according to the tongue of the present invention, two securing protrusions are provided at respective side surfaces of the elongated protrusion and the soft-resin molded portion is molded with the soft resin so as to cover the securing protrusions, and the securing protrusions are securing protrusions that reduce coming off of the soft-resin molded portion from the hard-resin molded portion.

Further, according to the tongue of the present invention, an end surface of the elongated protrusion of the hard-resin molded portion is a fine uneven surface, and the soft-resin molded portion is bonded or fused to the fine uneven surface.

Further, according to the tongue of the present invention, a protruding portion that protrudes towards the soft-resin molded portion is provided at an end of the hard-resin molded portion at an outer peripheral surface of the grasping portion in a direction along a direction in which the securing portion is secured to the buckle, and the protruding portion forms part of a boundary between the hard-resin molded portion and the soft-resin molded portion.

A seat belt device according to the present invention includes at least a seat belt, a seat belt retractor that retracts the seat belt, a tongue that is slidably supported by the seat belt, and a buckle, the tongue being inserted into and secured to the buckle, the seat belt being fastened around an occupant by inserting the tongue into and securing the tongue by the buckle, wherein the tongue is the tongue according to any one of the above-described tongues according to the present invention.

### Advantageous Effects of Invention

According to the tongue and the seat belt device of the present invention having such structures, the soft-resin molded portion is bonded or fused to a predetermined portion of the hard-resin molded portion. Therefore, by providing the soft-resin molded portion at a portion of the hard-resin molded portion that tends to contact members of a vehicle body, such as a center pillar, near the tongue, it is possible to allow the soft-resin molded portion to contact the members of the vehicle body. Consequently, by causing the soft-resin molded portion to function as a cushioning material, it is possible to effectively reduce the occurrence of small scratches and dents in the members of the vehicle body, and to effectively reduce noise that is generated due to contact of the tongue and the members of the vehicle body with each other.

In addition, an elongated protrusion is provided at a portion of the hard-resin molded portion that is bonded or fused to the soft-resin molded portion and the soft-resin molded portion is molded at the elongated protrusion with a soft resin so as to cover the elongated protrusion. Since the elongated protrusion increases the bonding area (fusion area) between the hard-resin molded portion and the soft-resin molded portion, it is possible to more effectively increase the bonding strength (fusion strength) between the hard-resin molded portion and the soft-resin molded portion. Consequently, even if two different types of mold resins are used, it is possible to provide a structure in which the soft-resin molded portion is less likely to come off from the hard-resin molded portion due to the elongated protrusion, as a result of which the coming off of the soft-resin molded portion from the hard-resin molded portion is reduced. Thus, it is possible to further increase the durability of the resin molded portion of the tongue (that is, the durability of the grasping portion of the tongue).

Further, the hard-resin molded portion is formed by performing molding at almost the entire grasping portion corresponding section of the metallic plate of the tongue with a relatively hard resin, such as polyamide resin, so that it is possible to further increase the strength of the grasping portion of the tongue.

Further, two securing protrusions are provided at respective sides of the elongated protrusion and the soft-resin molded portion is molded on the securing protrusions with a soft resin so as to cover the securing protrusions. Since the securing protrusions provide an anchoring effect with respect to the soft-resin molded portion, it is possible to make it even less likely for the soft-resin molded portion to come off from the hard-resin molded portion. In particular, by providing the securing protrusions near the boundary between the soft-resin molded portion and the hard-resin molded portion where the soft-resin molded portion tends to come off, it is possible to even more effectively reduce the coming off of the soft-resin molded portion from the hard-resin molded portion.

Further, since the end surface of the elongated protrusion of the hard-resin molded portion is formed as a fine uneven surface and the soft-resin molded portion is bonded or fused to the fine uneven surface, the relatively hard resin of the hard-resin molded portion and the relatively soft resin of the soft-resin molded portion at the uneven surface during resin molding tend to melt, so that the bonding strength (fusion strength) between the hard-resin molded portion and the soft-resin molded portion can be considerably increased. This makes it possible for the soft-resin molded portion to be connected to the hard-resin molded portion by a planar connection that provides a predetermined bonding strength (fusion strength), as a result of which it is possible to make it even less likely for the soft-resin molded portion to come off from the hard-resin molded portion.

Further, a protruding portion that protrudes towards the soft-resin molded portion is provided at the end of the hard-resin molded portion at the outer peripheral surface of the grasping portion in the direction along the direction in which the securing portion is secured to the buckle, and the protruding portion forms part of a boundary between the hard-resin molded portion and the soft-resin molded portion. The boundary region between the hard-resin molded portion and the soft-resin molded portion at the outer peripheral surface of the grasping portion in the direction along the direction in which the securing portion is secured to the buckle is a region where the tips of finger nails of a seat belt wearer tend to get caught. However, this protruding portion allows the portion of the end of the soft-resin molded portion where the tips of the finger nails of the seat belt wearer get caught to be further shortened. Therefore, since the tips of the finger nails are less likely to get caught by the end of the soft-resin molded portion, it is less likely for the soft-resin molded portion to come off from the hard-resin molded portion.

### Brief Description of Drawings

[Fig. 1] Fig. 1 is a schematic view of a seat belt device according to an exemplary embodiment of the present invention.
[Fig. 2] Fig. 2(A) is a perspective view of a tongue according to an exemplary embodiment of the present invention that is used in the seat belt device according to the exemplary embodiment, the tongue being shown in a state in which molding with a hard resin has been performed and molding with a soft resin has not been performed at a grasping portion at a metallic plate, which is a core; and Fig. 2(B) is a perspective view of the tongue in a state in which molding with a soft resin has been performed on a portion of the hard resin of the tongue in the state shown in Fig. 2(A).
[Fig. 3] Fig. 3 is a partial enlarged sectional view along line III-III in Fig. 2(B).
[Fig. 4] Fig. 4(A) is a plan view of the tongue according to the exemplary embodiment shown in Fig. 2(B), Fig. 4(B) is a sectional view taken along line IVB-IVB in Fig. 4(A), Fig. 4(C) is a sectional view taken along line IVC-IVC in Fig. 4(A), Fig. 4(D) is a sectional view taken along line IVD-IVD in Fig. 4(A), and Fig. 4(E) is a sectional view taken along line IVE-IVE in Fig. 4(A).
[Fig. 5] Fig. 5 is a partial enlarged perspective view of a portion V in Fig. 2(A).
[Fig. 6] Fig. 6 is a front view of Fig. 4(A) of the tongue according to the exemplary embodiment shown in Fig. 4(A).
[Fig. 7] Fig. 7(A) is a plan view of a tongue according to another exemplary embodiment of the present invention, Fig. 7(B) is a sectional view taken along line VIIB-VIIB in Fig. 7(A), and Fig. 7(C) is a sectional view taken along line VIIC-VIIC in Fig. 7(A).

### Description of Embodiments

Exemplary embodiments of the present invention are hereunder described using the drawings.

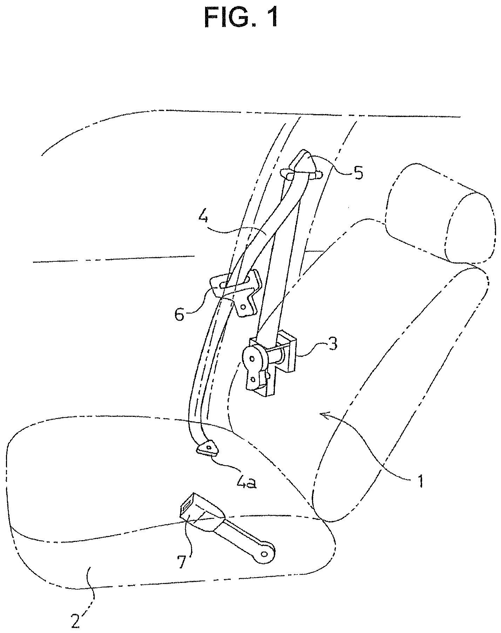

Fig. 1 is a schematic view of a seat belt device according to an exemplary embodiment of the present invention.

As shown in Fig. 1, the seat belt device according to the exemplary embodiment is basically the same as a three-point seat belt device that is generally publicly known. In Fig. 1, reference numeral 1 denotes the seat belt device, reference numeral 2 denotes a vehicle seat, reference numeral 3 denotes a seat belt retractor disposed at a vehicle body near the vehicle seat 2, reference numeral 4 denotes a seat belt that is withdrawably retracted by the seat belt retractor 3 and whose belt anchor 4a provided at an end of the seat belt 4 is fixed to a floor of the vehicle body or the vehicle seat 2, reference numeral 5 denotes a belt guide anchor that guides the seat belt 4 withdrawn from the seat belt retractor 3 towards an occupant's shoulder, reference numeral 6 denotes a tongue that is slidably supported by the seat belt 4 guided from the belt guide anchor 5, and reference numeral 7 denotes a buckle that is fixed to the floor of the vehicle body or the vehicle seat 2, the tongue 6 being inserted into and secured to the buckle 7 so as to be engageable with and disengageable from the buckle 7. A fastening operation and an unfastening operation of the seat belt 4 of the seat belt device 1 are also the same as those of existing seat belt devices that are publicly known.

When the seat belt 3 is not fastened, the tongue 6 is not secured to the buckle 7 and the whole seal belt 4 (more specifically, the length of the seat belt 4 that can be retracted by the seat belt retractor 3 without a problem) is retracted by the seat belt retractor 3. When the seat belt 4 is fastened around an occupant, as shown in Fig. 1, the seat belt 4 is withdrawn from the seat belt retractor 3 by a predetermined length. In addition, by securing the tongue 6 to the buckle 7 and removing slack in the seat belt 4, the seat belt 4 is fastened around the occupant.

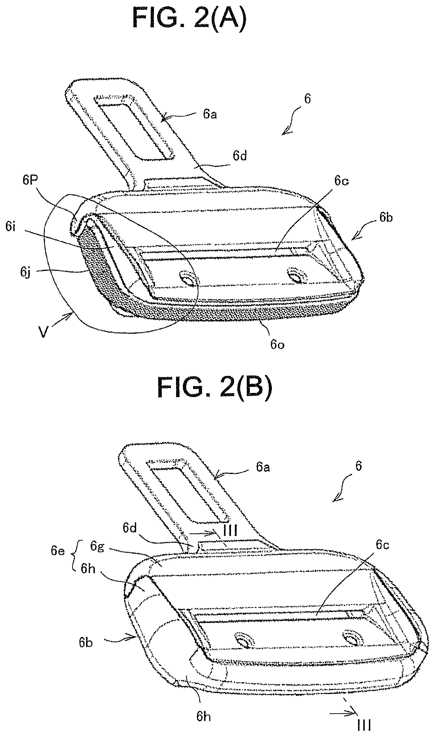

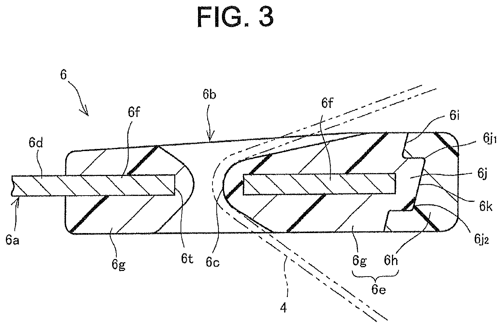

Fig. 2(A) is a perspective view of the tongue according to an exemplary embodiment of the present invention that is used in the seat belt device according to the exemplary embodiment, the tongue being shown in a state in which molding with a hard resin has been performed and molding with a soft resin has not been performed at a grasping portion at a metallic plate, which is a core; and Fig. 2(B) is a perspective view of the tongue in a state in which molding with a soft resin has been performed on a portion of the hard resin of the tongue in the state shown in Fig. 2(A). Fig. 3 is a partial enlarged sectional view along line III-III in Fig. 2(B).

As shown in Figs. 2(A) and 2(B) and Fig. 3, the tongue 6 according to the exemplary embodiment includes a securing portion 6a and a grasping portion 6b as with existing tongues. In this case, the securing portion 6a can be secured to the buckle 7 and the grasping portion 6b is a portion that is grasped by a seat-belt wearer when securing the securing portion 6a to the buckle 7. A belt through hole 6c through which the seat belt 4 passes is provided in the grasping portion 6b.

In addition, the tongue 6 includes a metallic plate 6d and a resin molded portion 6e. The metallic plate 6d includes the securing portion 6a and a grasping portion corresponding section 6f corresponding to the grasping portion 6b and forms a T shape. The metallic plate 6d has a through hole 6t for a belt through hole 6c. The resin molded portion 6e is a portion where molding has been performed at the grasping portion corresponding section 6f with a resin. In this case, the resin molded portion 6e includes a hard-resin molded portion 6g that has been molded with a relatively hard resin and a soft-resin molded portion 6h that has been molded with a resin that is softer than the hard-resin molded portion 6g. For example, polyamide resin, such as nylon 6, is used for the hard-resin molded portion 6g and thermoplastic elastomer (TPE) is used for the soft-resin molded portion 6h.

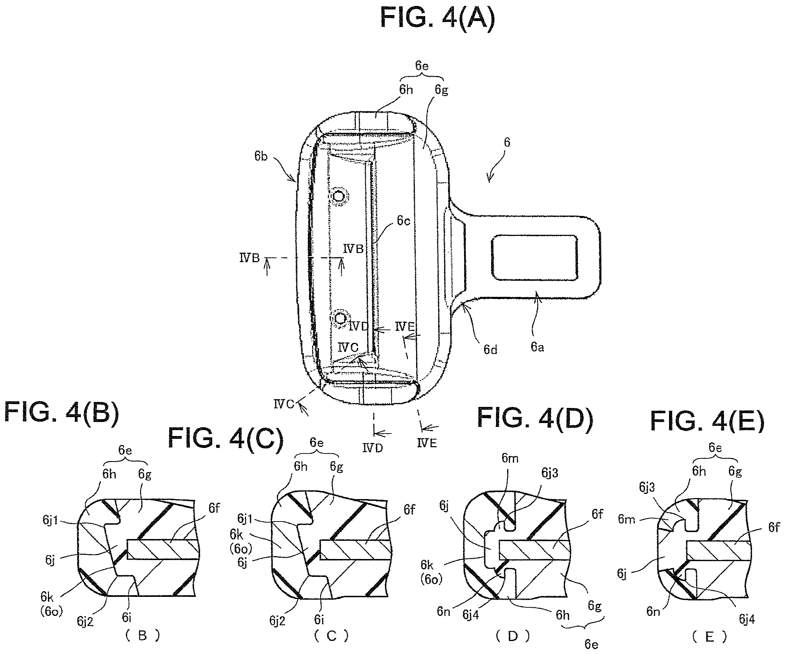

As shown in Figs. 2(A), 3, and 4(A), the hard-resin molded portion 6g is a portion where molding has been performed at the entire or substantially the entire surface of the grasping portion corresponding section 6f of the metallic plate 6d with polyamide resin. In this case, the molding with the polyamide resin is performed at an inner peripheral edge at the through hole 6t of the metallic plate 6d to form the belt through hole 6c. In this way, when the molding with the polyamide resin is performed at the entire or substantially the entire surface of the grasping portion corresponding section 6f of the metallic plate 6d, the hard-resin molded portion 6g is formed, so that the strength of the grasping portion 6b is increased. In the hard-resin molded portion 6g, a portion that has been molded at regions of the left side end surface and the right side end surface in Fig. 2(A) of the tongue 6 (an upper side end surface and a lower side end surface in Fig. 4(A); that is, side end surfaces in a direction substantially along a direction in which the securing portion 6a is secured to the buckle 7) and on a region corresponding to a side end surface opposite to the securing portion 6a and extending along an outer peripheral edge of the grasping portion 6b in Fig. 2(A) of the tongue 6 is a thin-walled portion 6i that is thinner than the other portions. Two ends of the thin-walled portion 6i are positioned substantially at securing-portion-6a side ends at respective left and right side end surfaces of the tongue 6. The soft-resin molded portion 6h is a portion in which TPE molding is performed on a surface of the thin-walled portion 6i of the hard-resin molded portion 6g. In this case, the polyamide resin and the TPE are joined by bonding (or fusion).

As mentioned above, in general, it is difficult to firmly bond polyamide resin and TPE, and they relatively easily come off from each other. Accordingly, in the tongue 6 according to the exemplary embodiment, a bonding structure between the polyamide resin and the TEP is a structure in which the hard-resin molded portion 6g, formed of the polyamide resin, and the soft-resin molded portion 6h, formed of the TPE, do not easily come off from each other as a result of being firmly bonded to each other. The structure in which the hard-resin molded portion 6g and the soft-resin molded portion 6h do not easily come off from each other is hereunder described.

As shown in Figs. 2(A), 3, and 4(B) to 4(E), first, an elongated protrusion 6j is provided at a surface of the thin-walled portion 6i of the hard-resin molded portion 6g. In this case, as a substantially U-shaped rib, the elongated protrusion 6j extends in the thin-walled portion 6i of the hard-resin molded portion 6g along the outer peripheral edge of the grasping portion 6b to the left and right side end surfaces of the tongue 6 and the side end surface of the tongue 6 opposite to the securing portion 6a. An end surface 6k of the elongated protrusion 6j is formed in the form of a straight line in transverse cross section in a direction that is orthogonal to a longitudinal direction of the elongated protrusion 6j. The shape of the elongated protrusion 6j in the transverse cross section in the direction that is orthogonal to the longitudinal direction of the elongated protrusion 6j is formed so as to differ depending upon the position of the grasping portion 6b.

That is, as shown in Fig. 3 and Figs. 4(B) and 4(C), in the region of the side end surface opposite to the securing portion 6a and regions of corners between the side end surface opposite to the securing portion 6a of the tongue 6 and the left and right side end surfaces of the tongue 6, the shape of the elongated protrusion 6j in transverse cross section is a substantially parallelogrammatic shape whose short side is substantially parallel to the metallic plate 6d. The soft-resin molded portion 6h is formed by TPE molding so as to cover the entire elongated protrusion 6j formed into a substantially parallelogrammatic shape in the thin-walled portion 6i of the hard-resin molded portion 6g. In this case, by increasing the molding temperature during the TPE molding, polyamide resins (such as nylon 6) at two edge portions 6j₁ and 6j₂ of the elongated protrusion 6j are fused, so that the polyamide resins (such as nylon 6) and the TPE are more firmly bonded (fused) with each other. The surface of the hard-resin molded portion 6g and the surface of the soft-resin molded portion 6h are substantially flush with each other. This makes it possible to prevent a seat-belt wearer from having a strange feeling even if two different types of molded portions, that is, the hard-resin molded portion 6g and the soft-resin molded portion 6h are provided at the grasping portion 6b of the tongue 6.

As shown in Fig. 4(D), in the regions of the left and right side end surfaces of the tongue 6, the shape of the elongated protrusion 6j in transverse cross section is substantially rectangular. Securing protrusions 6m and 6n are provided at sides of the substantially rectangular shape that are substantially parallel to the metallic plate 6d. These securing protrusions 6m and 6n extend in the longitudinal direction of the elongated protrusion 6j in the regions of the left and right side end surfaces, and their shapes in transverse cross section are substantially in the form of a fan forming an angle of about 90 degrees (that is, shapes that are substantially 1/4 of one circle). A portion of the arc of each fan faces a corresponding outer peripheral side end surface of the grasping portion 6b. The soft-resin molded portion 6h is formed by TPE molding so as to cover the entire substantially rectangular elongated protrusion 6j including the securing protrusions 6m and 6n in the thin-walled portion 6i of the hard-resin molded portion 6g. In this case, similarly to the above, by increasing the molding temperature during the TPE molding, polyamide resins (such as nylon 6) at two edge portions 6j₃ and 6j₄ of the respective securing protrusions 6m and 6n are fused, so that the polyamide resins (such as nylon 6) and the TPE are more firmly bonded (fused) with each other. Similarly to the above, the surface of the hard-resin molded portion 6g and the surface of the soft-resin molded portion 6h are substantially flush with each other. This makes it possible to prevent a seat-belt wearer from having a strange feeling even if two different types of molded portions, that is, the hard-resin molded portion 6g and the soft-resin molded portion 6h, are provided at the grasping portion 6b of the tongue 6.

Further, as shown in Fig. 4(E), in the regions of the two ends of the thin-walled portion 6i at the left and right side end surfaces of the tongue 6, the shape of the elongated protrusion 6j in transverse cross section is a substantially trapezoidal shape in which a side at an outer peripheral end is slightly longer. Securing protrusions 6m and 6n, which are similar to the securing protrusions 6m and 6n shown in Fig. 4(D), are provided at sides of the substantially trapezoidal shape that are substantially parallel to the metallic plate 6d (sides that are positioned in a direction that is substantially orthogonal to the height of the substantially trapezoidal shape). The soft-resin molded portion 6h is formed by TPE molding so as to cover the sides of the substantially trapezoidal shape of the substantially rectangular elongated protrusion 6j including the securing protrusions 6m and 6n in the thin-walled portion 6i of the hard-resin molded portion 6j, the sides being substantially parallel to the metallic plate 6d. In this case, similarly to the above, by increasing the molding temperature during the TPE molding, polyamide resins (such as nylon 6) at two edge portions 6j₃ and 6j₄ of the securing protrusions 6m and 6n are fused, so that the polyamide resins (such as nylon 6) and the TPE are more firmly bonded (fused) with each other. Similarly to the above, the surface of the hard-resin molded portion 6g and the surface of the soft-resin molded portion 6h are substantially flush with each other. In the regions, the hard-resin molded portion 6g is exposed at part of the outer peripheral end of the grasping portion 6b and the outer peripheral end of the grasping portion 6b is formed.

In this way, in the regions of the left and right side end surfaces of the tongue 6, the elongated protrusion 6j causes the area of contact between the molded portions at a boundary between the hard-resin molded portion 6g and the soft-resin molded portion 6h to be larger than that at the boundary of a substantially planar shape where the elongated protrusion 6j is not provided. This causes the hard-resin molded portion 6g and the soft-resin molded portion 6h to be more firmly bonded (fused) with each other, as a result of which it is less likely for them to come off from each other.

In particular, in the regions at the left and right side end surfaces of the tongue 6, the securing protrusions 6m and 6n are provided at the side faces of the elongated protrusion 6j and form the shape of an anchor. Therefore, even if the soft-resin molded portion 6h tries to come off from the hard-resin molded portion 6g, the soft-resin molded portion 6h is secured by the securing protrusions 6m and 6n, so that an anchoring effect is provided. Consequently, it is even less likely for the soft-resin molded portion 6h to come off from the hard-resin molded portion 6g. Accordingly, the elongated protrusion 6j and the securing protrusions 6m and 6n form a structure that makes it less likely for the hard-resin molded portion 6g and the soft-resin molded portion 6h to come off from each other.

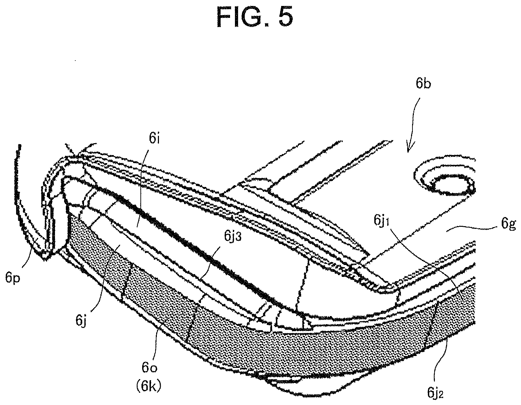

Further, as shown in Fig. 5, the end surface 6k of the elongated protrusion 6j is a fine uneven surface (a surface having a predetermined surface roughness such as a knurled surface or a pear-skin surface) 6o formed by surface texturing, such as etching. Due to the fine uneven surface 6o, the polyamide resin of the hard-resin molded portion 6g and the TPE of the soft-resin molded portion 6h at the uneven surface 6o during resin molding tend to melt, so that the bonding strength (fusion strength) of the hard-resin molded portion 6g and the soft-resin molded portion 6h with each other is increased. This makes it possible for the soft-resin molded portion 6h to be connected to the hard-resin molded portion 6g by a planar connection that provides a predetermined bonding strength (fusion strength), as a result of which it is possible to make it even less likely for the soft-resin molded portion 6h to come off from the hard-resin molded portion 6g. Therefore, the fine uneven surface 6o also forms a structure that makes it less likely for the hard-resin molded portion 6g and the soft-resin molded portion 6h to come off from each other.

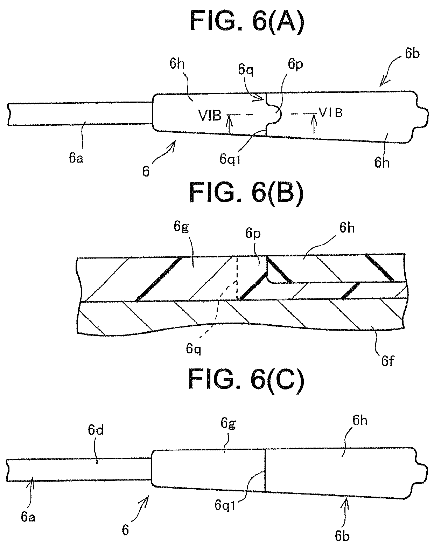

Further, as shown in Figs. 6(A) and 6(B), in the regions of the left and right side end surfaces of the tongue 6, substantially U-shaped protruding portions 6p that protrude towards the soft-resin molded portion 6 are formed at the hard-resin molded portion 6g. Ends 6q of the soft-resin molded portion 6h at the boundary between the hard-resin molded portion 6g and the soft-resin molded portion 6h in the regions of the left and right side end surfaces of the tongue 6 get caught by nail tips of fingers of a person handling the tongue, such as a seat belt wearer, as a result of which the soft-resin molded portion 6h tends to come off. Therefore, by providing the protruding portions 6p, portions 6q₁ of the ends 6q of the soft-resin molded portion 6h where the nail tips get caught (straight-line portions excluding the protruding portions 6p) are shorter than relatively long straight-line ends 6q₁ shown in Fig. 6(C) where the protruding portions 6p are not provided. That is, the protruding portions 6p reduce the sizes of areas where the nail tips get caught by the ends 6q of the soft-resin molded portion 6h. This makes it less likely for the nail tips to get caught by the ends 6q of the soft-resin molded portion 6h, as a result of which it becomes less likely for the soft-resin molded portion 6h to come off from the hard-resin molded portion 6g. Therefore, the protruding portions 6q also form a structure that makes it less likely for the hard-resin molded portion 6g and the soft-resin molded portion 6h to come off from each other.

According to the tongue 6 of the exemplary embodiment and the seat belt device 1 of the exemplary embodiment, by providing the soft-resin molded portion 6h at the left and right end portions of the grasping portion 6b of the tongue 6 and the end portion of the grasping portion 6b of the tongue 6 opposite to the securing portion 6a, the soft-resin molded portion 6b is provided at a portion of the hard-resin molded portion 6g that tends to contact members of a vehicle body, such as a center pillar 8 (shown in Fig. 1), near the tongue 6. Therefore, it is possible to allow the soft-resin molded portion 6h to contact the members of the vehicle body. That is, the soft-resin molded portion 6h contacts the members of the vehicle body frequently. Consequently, by causing the soft-resin molded portion 6b to function as a cushioning material, it is possible to effectively reduce the occurrence of small scratches and dents in the members of the vehicle body, such as a trim, at an inside wall of a vehicle and to effectively reduce noise that is generated due to contact of the tongue 6 and the members of the vehicle body with each other.

In addition, the elongated protrusion 6j is provided at a portion of the hard-resin molded portion 6g that is bonded or fused to the soft-resin molded portion 6h and the soft-resin molded portion 6h is molded on the elongated protrusion 6j with a soft resin so as to cover the elongated protrusion 6j. Since the elongated protrusion 6j increases the bonding area (fusion area) between the hard-resin molded portion 6g and the soft-resin molded portion 6h, it is possible to more effectively increase the bonding strength (fusion strength) between the hard-resin molded portion 6g and the soft-resin molded portion 6h. Consequently, even if two different types of mold resins are used, it is possible to provide a structure in which the soft-resin molded portion 6h is less likely to come off from the hard-resin molded portion 6g due to the elongated protrusion 6j, as a result of which the coming off of the soft-resin molded portion 6h from the hard-resin molded portion 6g is reduced. Thus, it is possible to further increase the durability of the resin molded portion 6e of the tongue 6 (that is, the durability of the grasping portion 6b of the tongue 6).

Further, the hard-resin molded portion 6g is formed by performing molding at almost the entire grasping portion corresponding section 6f of the metallic plate 6d of the tongue 6 with polyamide resin. Therefore, it is possible to further increase the strength of the grasping portion 6b of the tongue 6.

Further, in the regions of the left and right side end surfaces of the tongue 6, the securing protrusions 6m and 6n are provided at the respective sides of the elongated protrusion 6j of the hard-resin molded portion 6g and the soft-resin molded portion 6h is formed by TPE molding so as to cover the elongated protrusion 6j and the securing protrusions 6m and 6n. By this, in the regions of the left and right side end surfaces of the tongue 6, the securing protrusions 6m and 6n provide an anchoring effect with respect to the soft-resin molded portion 6h, so that it is possible to make it even less likely for the soft-resin molded portion 6h to come off from the hard-resin molded portion 6g. In particular, by providing the securing protrusions 6m and 6n near the boundary between the soft-resin molded portion 6h and the hard-resin molded portion 6g where the soft-resin molded portion 6h tends to come off, it is possible to even more effectively reduce the coming off of the soft-resin molded portion 6h from the hard-resin molded portion 6g.

Further, the end surface 6k of the aforementioned elongated protrusion 6j becomes the fine uneven surface 6o by surface texturing and the soft-resin molded portion 6h is bonded or fused to the fine uneven surface 6o. Due to the fine uneven surface 6o, the polyamide resin of the hard-resin molded portion 6g and the TPE of the soft-resin molded portion 6h at the uneven surface 6o during resin molding tend to melt, so that the bonding strength (fusion strength) of the hard-resin molded portion 6g and the soft-resin molded portion 6h with each other can be increased. This makes it possible for the soft-resin molded portion 6h to be connected to the hard-resin molded portion 6g by a planar connection that provides a predetermined bonding strength (fusion strength), as a result of which it is possible to make it even less likely for the soft-resin molded portion 6h to come off from the hard-resin molded portion 6g.

Further, in the regions of the left and right side end surfaces of the tongue 6, the substantially U-shaped protruding portions 6p that protrude towards the soft-resin molded portion 6h are formed at the hard-resin molded portion 6g. The protruding portions 6p form part of the boundary between the hard-resin molded portion 6g and the soft-resin molded portion 6h. The boundary region between the hard-resin molded portion 6g and the soft-resin molded portion 6h at the outer peripheral surface of the grasping portion 6b in the direction along the direction in which the securing portion 6a is secured to the buckle is a region where the tips of finger nails of a seat belt wearer tend to get caught. Therefore, by providing the protruding portions 6p, the portions 6q₁ of the ends 6q of the soft-resin molded portion 6h where the tips of the finger nails of the seat belt wearer get caught (straight-line portions excluding the protruding portions 6p) are further shortened. Therefore, since the nail tips are less likely to get caught by the ends 6q of the soft-resin molded portion 6h, it is less likely for the soft-resin molded portion 6h to come off from the hard-resin molded portion 6g.

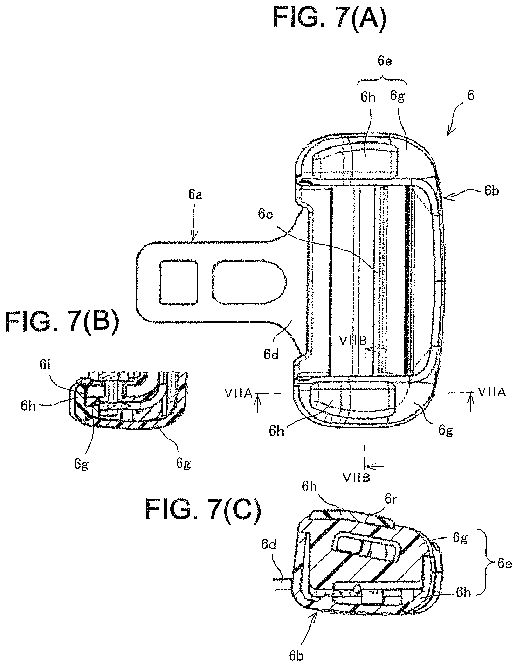

Fig. 7(A) is a plan view of a tongue according to another exemplary embodiment of the present invention. Fig. 7(B) is a sectional view taken along line VIIB-VIIB in Fig. 7(A). Fig. 7(C) is a sectional view taken along line VIIC-VIIC in Fig. 7(A). Structural portions that correspond to those of the tongue 6 according to the previous exemplary embodiment are given the same reference numerals and are not described in detail.

As shown in Figs. 7(A) to 7(C), in the tongue 6 according to the other exemplary embodiment, as in the previous exemplary embodiment, a hard-resin molded portion 6g is provided by performing molding at a grasping portion corresponding section 6f of a metallic plate 6d with polyamide resin, such as nylon 6. In addition, in the tongue 6 according to this exemplary embodiment, a soft-resin molded portion 6h is provided on a portion of the hard-resin molded portion 6g where the tongue 6 in a seat belt device 1 that is not being used in fastening a seat belt tends to contact a vehicle body, such as a trim. More specifically, recessed portions 6r and 6s having relatively flat bottom surfaces are formed on left and right ends (upper and lower ends in Fig. 7(A)) of a belt through hole 6c in a region of the hard-resin molded portion 6g in a flat portion of a grasping portion 6b. In addition, the soft-resin molded portion 6h is provided by TPE molding in these recessed portions 6r and 6s. In this case, as in the previous exemplary embodiment, by forming a fine uneven surface 6o by surface-texturing the substantially flat bottom surfaces of the recessed portions 6r and 6s, the bonding strength (fusion strength) between the hard-resin molded portion 6g and the soft-resin molded portion 6h is increased, as a result of which it is less likely for the soft-resin molded portion 6h to come off from the hard-resin molded portion 6g.

The other structural features and operational advantages of the tongue 6 according to this exemplary embodiment are the same as those of the tongue 6 according to the previous exemplary embodiment.

The present invention is not limited to the above-described exemplary embodiments, so that various changes in design may be made within the technical matters in the scope of the claims.

### Industrial Applicability

The tongue according to the present invention can be suitably utilized as a tongue that is used in a seat belt device, that is slidably supported by a seat belt, and that is secured to a buckle fixed to, for example, a vehicle body. In addition, the seat belt device according to the present invention can be suitably utilized as a seat belt device using such a tongue.

## Claims

1. A tongue (6), comprising
a securing portion (6a) that is formed of a metallic plate and that is securable to a buckle (7), and
a resin molded portion (6e) that forms a grasping portion (6b) as a result of performing molding at a grasping portion corresponding section (6f) with a resin and that has a belt through hole (6c) through which a seat belt (4) passes, the grasping portion corresponding section (6f) being formed of the metallic plate and being integrally formed with the securing portion (6a), the grasping portion (6b) being grasped and a securing operation being performed to secure the securing portion (6a) to the buckle (7),
wherein the resin molded portion (6e) includes a hard-resin molded portion (6g) that is formed by performing molding at a predetermined portion of the grasping portion corresponding section (6f) of the metallic plate with a hard resin and a soft-resin molded portion (6h) that is formed by being molded on a predetermined portion of the hard-resin molded portion (6g) with a resin that is softer than the hard resin and by being bonded or fused to the hard-resin molded portion (6g),
wherein an elongated protrusion (6j) is provided at a portion where the hard-resin molded portion (6g) is bonded or fused to the soft-resin molded portion (6h), wherein the soft-resin molded portion (6h) is molded with the soft resin so as to cover the elongated protrusion (6j),
**characterized in that**
two securing protrusions (6m,6n) are provided at respective side surfaces of the elongated protrusion (6j), and
the soft-resin molded portion (6h) is molded with the soft resin so as to cover the securing protrusions (6m,6n) and the securing protrusions (6m,6n) are securing protrusions (6m,6n) that reduce coming off of the soft-resin molded portion (6h) from the hard-resin molded portion (6g).

2. The tongue (6) according to Claim 1,
wherein an end surface of the elongated protrusion (6j) of the hard-resin molded portion (6g) is a fine uneven surface (6o), and
wherein the soft-resin molded portion (6h) is bonded or fused to the fine uneven surface (6o).

3. The tongue (6) according to Claim 1 or Claim 2,
wherein a protruding portion (6p) that protrudes towards the soft-resin molded portion (6h) is provided at an end of the hard-resin molded portion (6g) at an outer peripheral surface of the grasping portion (6b) in a direction along a direction in which the securing portion (6a) is secured to the buckle (7), and
wherein the protruding portion (6p) forms part of a boundary between the hard-resin molded portion (6g) and the soft-resin molded portion (6h).

4. A seat belt device (1), comprising at least
a seat belt (4),
a seat belt retractor (3) that retracts the seat belt (4),
a tongue (6) that is slidably supported by the seat belt (4), and
a buckle (7),
the tongue (6) being inserted into and secured to the buckle (7), the seat belt (4) being fastened around an occupant by inserting the tongue (7) into and securing the tongue (6) to the buckle (7),
wherein the tongue is the tongue according to any one of Claims 1 to 3.

## Patentansprüche

1. Zunge (6) umfassend
einen Befestigungsabschnitt (6a), welcher aus einer metallischen Platte ausgebildet ist und welcher an einem Gurtschloss (7) befestigbar ist, und
einen aus Harz geformten Abschnitt (6e), welcher einen Griffabschnitt (6b) als Ergebnis einer Durchführung einer Ausformung eines einen Griffabschnitt entsprechenden Abschnitts (6f) mit einem Harz ausbildet und welcher ein Gurtdurchgangsloch (6c) aufweist, durch welches ein Sitzgurt (4) verläuft, wobei der einem Griffabschnitt entsprechende Abschnitt (6f) aus der metallischen Platte ausgebildet ist und integral mit dem Befestigungsabschnitt (6a) ausgebildet ist, wobei der Griffabschnitt (6b) gegriffen wird und eine Befestigungstätigkeit ausgeführt wird, um den Befestigungsabschnitt (6a) an dem Griffschloss (7) zu befestigen,
wobei der aus Harz geformte Abschnitt (6e) aufweist einen aus Hartharz geformten Abschnitt (6g), welcher ausgebildet ist, indem ein Formen eines vorbestimmten Abschnitts des dem Griffabschnitt entsprechenden Abschnitts (6f) der metallischen Platte mit einem Hartharz ausgeführt wird, und einen aus Weichharz geformten Abschnitt (6h), welcher ausgebildet ist, indem er auf einem vorbestimmten Abschnitt des aus Hartharz geformten Abschnitts (6g) mit einem Harz geformt wird, welches weicher als das Hartharz ist, und indem er mit dem aus Hartharz geformten Abschnitt (6g) verbunden oder verschweißt wird,
wobei ein länglicher Vorsprung (6j) an einem Abschnitt vorhanden ist, wo der aus Hartharz geformte Abschnitt (6g) mit dem aus Weichharz geformten Abschnitt (6h) verbunden oder verschweißt ist,
wobei der aus Weichharz geformte Abschnitt (6h) mit dem Weichharz geformt ist, um so den länglichen Vorsprung (6j) zu überdecken,
**dadurch gekennzeichnet, dass**
zwei Befestigungsvorsprünge (6m, 6n) an entsprechenden Seitenflächen des länglichen Vorsprungs (6j) vorhanden sind, und
der aus Weichharz geformte Abschnitt (6h) mit dem Weichharz geformt ist, um die Befestigungsvorsprünge (6m, 6n) zu überdecken, und wobei die Befestigungsvorsprünge (6m, 6n) Befestigungsvorsprünge (6m, 6n) sind, welche ein Ablösen des aus Weichharz geformten Abschnitts (6h) von dem aus Hartharz geformten Abschnitt (6g) verringern.

2. Zunge (6) nach Anspruch 1,
wobei eine Endfläche des länglichen Vorsprungs (6j) des aus Hartharz geformten Abschnitts (6g) eine feine unebene Fläche (6o) ist, und
wobei der aus Weichharz geformte Abschnitt (6h) mit der feinen unebenen Fläche (6o) verbunden oder verschweißt ist.

3. Zunge (6) nach Anspruch 1 oder Anspruch 2,
wobei ein hervorragender Abschnitt (6p), welcher zu dem aus Weichharz geformten Abschnitt (6h) ragt, an einem Ende des aus Hartharz geformten Abschnitts (6g) an einer äußeren Umfangsfläche des Griffabschnitts (6b) in einer Richtung entlang einer Richtung, in welcher der Befestigungsabschnitt (6a) mit dem Griffschloss (7) befestigt wird, vorhanden ist, und
wobei der hervorragende Abschnitt (6p) einen Teil einer Grenze zwischen dem aus Hartharz geformten Abschnitt (6g) und dem aus Weichharz geformten Abschnitt (6h) ausbildet.

4. Sitzgurtvorrichtung (1) zumindest umfassend
einen Sitzgurt (4),
eine Sitzgurt-Aufrollvorrichtung (3), welche den Sitzgurt (4) aufrollt,
eine Zunge (6), welche gleitend durch den Sitzgurt (4) gehalten wird, und
ein Griffschloss (7),
wobei die Zunge (6) in das Griffschloss (7) eingeführt wird und an diesem befestigt wird, wobei der Sitzgurt (4) um einen Insassen herum befestigt wird, indem die Zunge (7) in das Gurtschloss (7) eingeführt wird und die Zunge (6) an dem Gurtschloss (7) befestigt wird,
wobei die Zunge die Zunge nach einem der Ansprüche 1 bis 3 ist.

## Revendications

1. Languette (6) comprenant :
une partie de fixation (6a) qui est formée avec une plaque métallique et qui peut être fixée à une boucle (7), et
une partie moulée en résine (6e) qui forme une partie de préhension (6b) suite à la réalisation du moulage au niveau d'une section correspondante de partie de préhension (6f) avec une résine et qui a un trou débouchant de ceinture (6c) à travers lequel passe une ceinture de sécurité (4), la section correspondante de partie de préhension (6f) étant formée avec la plaque métallique et étant formée de manière solidaire avec la partie de fixation (6a), la partie de préhension (6b) pouvant être saisie et une opération de fixation étant réalisée pour fixer la partie de fixation (6a) à la boucle (7),
dans laquelle la partie moulée en résine (6e) comprend une partie moulée en résine dure (6g) qui est formée en réalisant le moulage au niveau d'une partie prédéterminée de la section correspondante de partie de préhension (6f) de la plaque métallique avec une résine dure et une partie moulée en résine souple (6h) qui est formée en étant moulée sur une partie prédéterminée de la partie moulée en résine dure (6g) avec une résine qui est plus souple que la résine dure et en étant reliée ou fondue sur la partie moulée en résine dure (6g),
dans laquelle une saillie allongée (6j) est prévue au niveau d'une partie où la partie moulée en résine dure (6g) est reliée ou fondue sur la partie moulée en résine souple (6h),
dans laquelle la partie moulée en résine souple (6h) est moulée avec la résine souple afin de recouvrir la saillie allongée (6j),
**caractérisée en ce que** :
deux saillies de fixation (6m, 6n) sont prévues au niveau des surfaces latérales respectives de la saillie allongée (6j), et
la partie moulée en résine souple (6h) est moulée avec la résine souple afin de recouvrir les saillies de fixation (6m, 6n) et les saillies de fixation (6m, 6n) sont des saillies de fixation (6m, 6n) qui réduisent le détachement de la partie moulée en résine souple (6h) de la partie moulée en résine dure (6g).

2. Languette (6) selon la revendication 1,
dans laquelle une surface d'extrémité de la saillie allongée (6j) de la partie moulée en résine dure (6g) est une surface irrégulière fine (6o), et
dans laquelle la partie moulée en résine souple (6h) est reliée ou fondue sur la surface irrégulière fine (6o).

3. Languette (6) selon la revendication 1 ou la revendication 2,
dans laquelle une partie en saillie (6p) qui fait saillie vers la partie moulée en résine souple (6h) est prévue au niveau d'une extrémité de la partie moulée en résine dure (6g) au niveau d'une surface périphérie externe de la partie de préhension (6b) dans une direction le long d'une direction dans laquelle la partie de fixation (6a) est fixée sur la boucle (7) et
dans laquelle la partie en saillie (6p) fait partie d'une limite entre la partie moulée en résine dure (6g) et la partie moulée en résine souple (6h).

4. Dispositif de ceinture de sécurité (1) comprenant au moins :
une ceinture de sécurité (4),
un enrouleur de ceinture de sécurité (3) qui enroule la ceinture de sécurité (4),
une languette (6) qui est supportée de manière coulissante par la ceinture de sécurité (4), et
une boucle (7),
la languette (6) étant insérée dans et fixée sur la boucle (7), la ceinture de sécurité (4) étant fixée autour d'un occupant en insérant la languette (7) dans et en fixant la languette (6) sur la boucle (7),
dans laquelle la languette est la languette selon l'une quelconque des revendications 1 à 3.
